# EUROPEAN PATENT SPECIFICATION

(11) **EP 3 225 807 B1**
(45) Date of publication and mention of the grant of the patent: **03.10.2018**
(21) Application number: 15808439.2
(22) Date of filing: 23.11.2015
(51) Int. Cl.: F02B 21/00, F02B 41/04, F02B 75/02, F01L 13/08

(54) **SIX-STROKE INTERNAL COMBUSTION ENGINE**
SECHS-TAKT-BRENNKRAFTMASCHINE
MOTEUR À COMBUSTION INTERNE À SIX TEMPS

(30) Priority: 26.11.2014 ES 201431761
(43) Date of publication of application: 04.10.2017
(73) Proprietor: Denersa S.L., 09004 Burgos (ES)
(72) Inventor: SALAZAR PUENTE, Roberto, E-09004 Burgos (ES)
(74) Representative: Pons
(86) International application number: PCT/ES2015/070841
(87) International publication number: WO 2016/083640

(56) References cited:
- EP-A2- 0 737 800
- DE-A1- 3 042 313
- GB-A- 2 057 052
- US-A1- 2007 044 778
- US-B1- 6 223 846

## Description

### OBJECT OF THE INVENTION

The present invention relates to an eight-phases engine having high thermal efficiency and low polluting emissions and which is formed by an internal combustion engine and a heat exchanger, due to the fact that it makes use of the residual heat of the exhaust fumes of a first exhaust phase of the internal combustion engine to heat a portion of the air admitted by the cylinder in the intake phase, which then flows into an ancillary tank subsequently used to carry out the charging and expansion of that air in the interior of the cylinder and the subsequent evacuation thereof, once the first six phases have been completed: intake, first compression, transfer, second compression, first expansion and first exhaust.

### BACKGROUND OF THE INVENTION

Currently, internal combustion engines, both those with spark ignition and those with compression ignition, have low thermal efficiency, generally comprised between 35% and 45%.

A significant portion of the calorific energy of the fuel is lost in the cooling system and in the exhaust fumes.

This energy evacuated through the exhaust fumes is highly relevant and is at a temperature of approximately 1,000ºC, particularly in supercharged internal combustion engines having low capacity in relation to their output and running at high effective mean pressures, currently widely used due to their greater efficiency.

In this case, the temperatures of the exhaust fumes are so high that, at times, the exhaust manifold is cooled so that the turbo turbine does not work at such high temperatures.

The useful way of lowering the high temperature of the exhaust fumes is to prolong the expansion stroke, i.e. greater expansion stroke than compression stroke. These engines are known as overexpanded engines. There are different solutions for performing this overexpansion, such as the Atkinson and Miller cycles, wherein a delayed closure of the intake valve is carried out, and the complex mechanical systems wherein the expansion and exhaust strokes are greater than the intake and compression strokes. Another way of obtaining this overexpansion is by installing a turbine in the exhaust manifold that collects a portion of its energy and uses it to actuate a high-speed electric generator (electric turbocompound engines) or conduct the energy of the turbine towards the crankshaft by means of a speed reducer (mechanical turbocompound engines).

Overexpanded engines achieve enhanced efficiency but continue to evacuate exhaust fumes at high temperatures without making use of them. Also, in the case of some supercharged engines, the temperature of the exhaust gases must be lowered before entering the turbine.

Patent US7398650 B2, which discloses an internal combustion engine comprising a positive displacement compressor connected to the intake duct to supply compressed air to the engine, and a turbine connected to the exhaust duct to convert the excess energy of the exhaust fumes into power, wherein the turbine is connected to the engine through a reduction mechanism and wherein the compressor and the turbine are coupled to the engine by means of a pulley mounted on the crankshaft, a second pulley mounted on the shaft of the gearbox and a third pulley mounted on the shaft of the mechanical charger.

In addition, patent US7950231 B2 discloses a low-emission six-stroke turbo engine comprising an air intake and an exhaust pipe for the combustion products, in addition to a pair of turbo-compressors for receiving the combustion products in a serial relationship and an exhaust fume post-treatment device, such as a particle filter, to receive the downstream turbine combustion products. A power turbine receives the output from the exhaust fume post-treatment device and an exhaust fume recirculation system disposed downstream of and exposed to the output of the power turbine selectively conducts a selected portion of the output to a point upstream of the turbocompressor compressor. A device adds fuel to the post-treatment device to regenerate the particle filter and the power turbine recovers the additional energy. The power turbine may be used to conduct accessories or the main engine output. The system may selectively add fuel for the exhaust fume post-treatment device to temporarily increase the energy conducting accessories for the engine or the addition to main engine output.

However, these systems only make use of a small portion of the energy of the exhaust fumes, mainly their kinetic energy, since the exhaust gases are still at very high temperatures on flowing out of the turbine that actuates the electric generator and, therefore, do not make use of the calorific energy of the internal combustion engine exhaust fumes appropriately.

This problem occurs particularly in internal combustion engines, according to supercharged Otto cycle engines.

The present invention proposes an eight-phases engine that increases thermal efficiency and reduces polluting emissions with respect to the known engines in the state of the art.

### DESCRIPTION OF THE INVENTION

The present invention relates to an eight-phases engine having high thermal efficiency and low polluting emissions and which is formed by an internal combustion engine and a heat exchanger, due to the fact that it uses the residual heat of the exhaust fumes of a first exhaust phase of the internal combustion engine to heat part of the air admitted by the cylinder in the intake phase.

The internal combustion engine comprises in turn an air intake duct, an intake valve, an exhaust valve, a transfer valve and a charge valve.

Next, that portion of the air flows into an ancillary tank subsequently used to perform the charge and expansion of that air in the interior of the cylinder and the subsequent evacuation thereof, after the first six strokes: intake, first compression, transfer, second compression, first expansion and first exhaust.

The internal combustion engine may be, inter alia, spark ignited or compression ignited, atmospheric or supercharged, fed by liquid or gas fuel or a combination thereof, which comprises at least one piston displaceable through the interior of a cylinder, at least one intake valve, one exhaust valve, one transfer valve and one charge valve.

The eight-phases engine of the present invention comprises an internal combustion engine wherein the air admitted in the intake phase is compressed in a first compression phase up to a compression ratio lower than the maximum compression ratio of the internal combustion engine and, subsequently, a first portion of that compressed air is transferred, in a transfer phase, through a transfer valve to a compressed air storage tank.

Said first part of the compressed air transferred to the storage tank constitutes the working fluid of a bottom cycle that receives heat at a constant pressure from the exhaust fumes of a top cycle and are subsequently conducted to a heat exchanger where they will absorb heat from the exhaust fumes of a top cycle that will be described hereunder.

The portion of air remaining in the cylinder, or second portion of air, once the transfer phase to the compressed air storage tank has elapsed, is used in the top cycle executed in the internal combustion engine.

Said second portion of air is compressed in the combustion engine in a second compression phase until reaching the maximum compression ratio of the internal combustion engine, followed by a first expansion phase, wherein said second portion of air is over-expanded, and by a first exhaust phase.

The exhaust gases of the internal combustion engine of the top cycle are conducted towards the heat exchanger, where they transfer heat to the compressed air of the bottom cycle at a constant pressure.

The compressed air of the bottom cycle heated by the exhaust fumes of the top cycle in the heat exchanger is charged into the cylinder through the charge valve. This air is expanded in the interior of the cylinder in a second expansion phase.

Lastly, once expanded, said bottom-cycle air is evacuated through the exhaust valve during a second exhaust phase without passing through the exchanger.

In this manner, the temperature of the internal combustion engine exhaust gases is lowered and their energy used to improve the thermal efficiency of the eight-phases engine.

Also, more comprehensive combustion and improved thermal efficiency is achieved in the first expansion produced in the first expansion phase of the internal combustion engine.

### BRIEF DESCRIPTION OF THE DRAWINGS

Figure 1 shows a schematic view of the cylinder and piston of the eight-phases engine of the present invention during the intake phase.
Figure 2 shows a schematic view of the cylinder and piston of the eight-phases engine of the present invention during the first compression phase.
Figure 3 shows a schematic view of the cylinder, the piston and the compressed air tank of the eight-phases engine of the present invention during transfer phase.
Figure 4 shows a schematic view of the cylinder and piston of the eight-phases engine of the present invention during the second compression phase.
Figure 5 shows a schematic view of the cylinder and piston of the eight-phase engine of the present invention during the first expansion phase.
Figure 6 shows a schematic view of the eight-phases engine of the present invention during the first exhaust phase.
Figure 7 shows a schematic view of the eight-phases engine of the present invention during charging and the second expansion phase of the bottom-cycle air in the cylinder.
Figure 8 shows a schematic view of the eight-phases engine of the present invention during the second exhaust phase, wherein the bottom-cycle air contained in the cylinder is evacuated.
Figure 9 shows a general schematic view of the eight-phases engine of the present invention.
Figure 10 shows a schematic view of part of the eight-phases engine of the present invention comprising an ancillary compressor actuated mechanically or electrically destined for feeding the bottom-cycle compressed air tank.

### DETAILED DESCRIPTION OF THE INVENTION

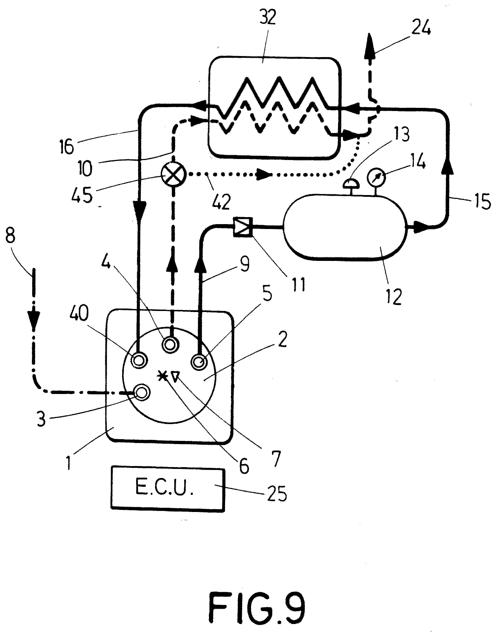

Following is a detailed description of the eight-phases engine of the present invention according to a first embodiment shown in figure 9. The eight-phases engine that runs with a top cycle and a bottom cycle comprises an internal combustion engine (1) and a heat exchanger (32). The internal combustion engine (1) comprises in turn an air intake duct (8), an intake valve (3), an exhaust valve (4), a transfer valve (5), an injector (6) and a spark plug in the case of spark-ignition engines, a charge valve (40).

The eight-phases engine also comprises a compressed air storage tank (12), a transfer duct (9) for transferring air from the cylinder (2) to the storage tank (12), a check valve (11), a safety relief valve (13), a pressure sensor (14), a transfer duct (15) for transferring air from the bottom-cycle compressed air to the cylinder (2), a top-cycle air evacuation duct (24) at the outlet of the heat exchanger (32) and an electronic control unit (25).

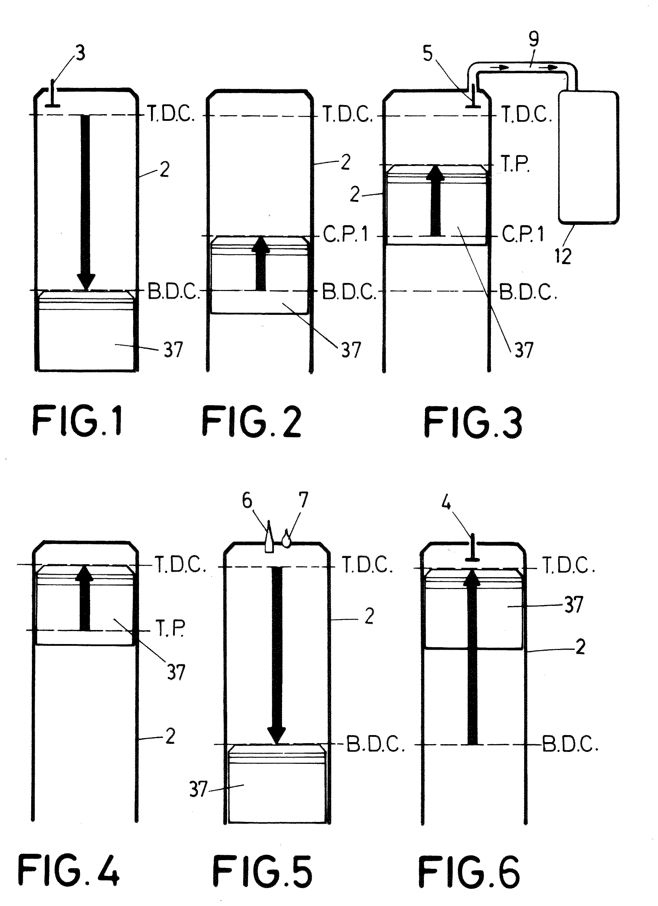

The cycle phases as a piston (37) is displaced in a cylinder (2) of the eight-phases internal combustion engine of the present invention, according to figures 1 to 8, is as follows:

### I Intake Stroke (Figure 1)

The piston (37) is displaced from the Top Dead Centre (TDC) to the Bottom Dead Centre (BDC) inside the cylinder (2). The intake valve (3) remains open while the rest of the valves, the exhaust valve (4), the transfer valve (5) and the charge valve (40) remain closed and air enters the cylinder (2).

A portion of the air admitted in the cylinder (2) follows the top cycle of the internal combustion engine and another portion of the air follows the Brayton-Joule bottom cycle with constant pressure heating using the heat provided by the exhaust fumes of the internal combustion engine.

### II-1 Compression Stroke - First Compression Phase (Figure 2)

The intake valve (3) is closed and the other valves, the exhaust valve (4) and the transfer valve (5) and the charge valve (40) remain closed. The piston (37) is displaced from the BDC to a first compression point CP1 disposed between the BDC and the TDC, the situation of which is variable and its position is determined by the electronic control unit, ECU (25), up to a first pre-established level of compression.

### II-2 Compression Stroke - Transfer Phase (Figure 3)

The piston (37) is displaced from the first compression point CP1 to a transfer point TP. At the start of this phase the piston (37) is disposed in the first compression point CP1 and then the transfer valve (5) is opened, when the pressure in the cylinder is similar to a certain pressure equal to that of the compressed air tank (12). The transfer valve (5) remains open until the transfer point TP, transferring the compressed air in the previous stage from the cylinder (2) to the compressed air tank (12) at an approximately constant pressure. When the piston (37) reaches the transfer point TP the transfer valve (5) is closed. This air transferred to the compressed air tank (12) is the air that follows the bottom cycle.

### II-3 Compression Stroke - Second Compression Phase (Figure 4)

The intake valve (3), the exhaust valve (4), the transfer valve (5) and the charge valve (40) remain closed and the piston (37) is displaced from the transfer point TP to the TDC. The air remaining inside the cylinder (2) remains compressed up to the maximum compression established in the cycle. This remaining air is the air that follows the top cycle in the internal combustion engine.

In the case of spark ignited engines, fuel injection occurs along the piston path from the transfer point (TP) to the TDC, in the second compression phase, through the injector (6).

In the case of compression ignition, the injection of the fuel through the injector (6) takes place at the end of the second compression phase and start of the expansion phase.

### III First Expansion Stroke (Figure 5)

In the case of spark ignition, when the piston (37) is approximately in the TDC, ignition of the air and fuel mixture occurs by actuating the sparkplug (7).

In the case of compression ignition engines, when the piston (37) approximates the TDC, fuel injection through the injector (6) is initiated.

The valves (3, 4, 5, 40) remain closed and the combustion gases are expanded with a much higher expansion ratio than the top-cycle compression ratio.

### IV First Exhaust Stroke (Figure 6)

When the piston (37) is proximal to the BDC point, the exhaust valve (4) is opened and the exhaust fumes flow out of the cylinder (2). This mass of gases is that which followed the top cycle of the internal combustion engine, which at the end of the exhaust stroke complete the top cycle and are conducted towards the heat exchanger (32) where they transfer heat to the fluid that follows the bottom cycle at a constant pressure. When the exhaust valve (4) opens, the exhaust fumes are still at a high temperature and relatively low pressure, since they have expanded inside the cylinder with a much higher expansion ratio than the compression ratio.

Shortly before the piston reaches the TDC, the exhaust valve (4) is closed with the object of producing a slight compression of the exhaust gases remaining inside the cylinder so that its pressure at the start of the charge and second expansion stroke that will be described hereunder, the pressure of the exhaust fumes, is similar to the pressure of the compressed air tank (12).

Heat exchange occurs in the heat exchanger (32) of the bottom cycle, preferably counter flow heat exchange, where the internal combustion engine exhaust fumes transfer a significant part of their calorific energy to the compressed air coming from the compressed air tank (12).

The compressed air of said compressed air tank (12) has been compressed and transferred from the cylinder to the compressed air tank (12) during the previously described phase II-1 (first compression phase) and II-3 (second compression phase) and is subjected to a Brayton-Joule thermodynamic cycle with an isobaric heating stage in the exchanger (32) with the heat coming from the top-cycle exhaust fumes of the internal combustion engine (1).

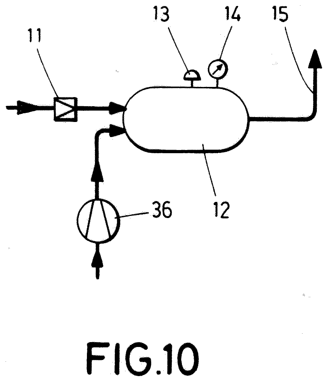

Optionally, the eight-phases engine may comprise an ancillary compressor (36) destined for stabilising the pressure of the compressed air (12), as observed in figure 10.

Therefore, heat exchange, preferably counter flow heat exchange, wherein two fluids intervene, occurs in the exchanger (32): on the one hand, the top-cycle exhaust fumes coming from the internal combustion engine (1) and, on the other, the fluid air coming from the compressed air tank (12), performing the bottom cycle.

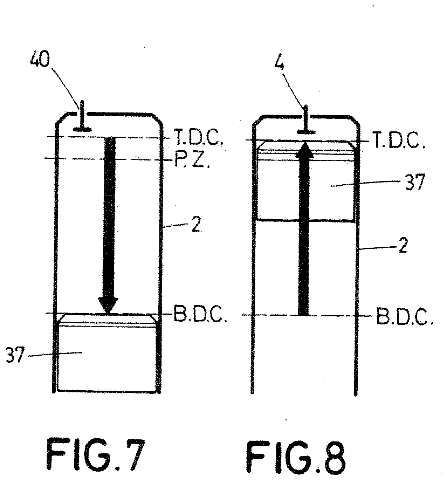

### V Charge and second expansion stroke of the bottom-cycle compressed air (Figure 7)

When the piston (37) is in the vicinity of the TDC, the compressed air charge valve (40) is opened, whereupon the compressed air coming from the compressed air tank (12) enters the cylinder (2), mixing with the remaining exhaust fumes at a similar pressure. Meanwhile, the charge valve (40) remains open and the valves (3, 4, 5) remain closed and the compressed air is transferred from the compressed air tank (12) to the cylinder (2).

The transfer of compressed air to the cylinder (2) takes place at an approximately constant pressure, since the increase in cylinder volume (2) throughout the compressed air intake stroke is offset by the expansion of the compressed air when crossing the exchanger (32). Additionally, the rise in volume that occurs in the cylinder (2) is very small compared with the volume of the compressed air tank (12). Said transfer of compressed air to the cylinder (2) occurs in this phase until reaching an intermediate closing point PZ of the cylinder where the charge valve (40) is closed, the valves (3, 4, 5) remain closed and the compressed air contained in the cylinder (2) expands until the piston (37) reaches the BDC.

### VI Second Exhaust Stroke of the bottom-cycle compressed air (Figure 8)

Approximately when the piston (37) reaches the BDC, the exhaust valve (4) opens and the expanded air is evacuated without passing through the exchanger (32), since it is bypassed by means of a bypass valve (45), since its temperature will be substantially lowered, completing the top and bottom cycles in six piston phases.

The electronic control unit (25) controls the opening and closing of the transfer valve (5) and the charge valve (40) at all times, so that the pressure in the compressed air tank (12) remains constant within a pre-established range. The electronic control unit (25) also controls the actuation of the ancillary compressor (36) in the event of being installed, so that the pressure of the compressed air circuit is controlled.

### OTHER EMBODIMENTS

The aforementioned embodiment to which the following is added:
- Installation of the one-way valve (11) between the transfer valve (5) and the compressed air tank (12), to guarantee the one-way direction of the air flow from the cylinder (2) to the compressed air tank (12).
- Installation of the ancillary compressor (36) that feeds the compressed air tank (12) controlled by the electronic control unit ECU (25) so that it improves the stabilisation of pressures in the compressed air circuit in the constant range established.

It should be noted that the eight-phases engine solution proposed in the present invention is not based on the number of internal combustion engine cylinders. All phases of the previously described eight-phases cycle are developed by each and every one of the internal combustion engine cylinders. Therefore, it is a fully functional solution in single-cylinder engines, as shown in the figures, or in engines with various cylinders.

In terms of the valve leads and lags, it must be indicated that the opening and closing moments of the intake valves of the internal combustion engine indicated in the present description are the indicative theoretical moments. In practice, the leads shall be used in the opening of the intake and the opening of exhaust, and lags in the closure of the intake and closure of the exhaust which are most convenient.

The injection and ignition moments indicated in the present description are theoretical moments that will be corrected, with the corresponding injection and ignition leads which are most convenient.

## Claims

1. An eight-phases engine comprising an internal combustion engine (1) which in turn comprises an air intake duct (8), an intake valve (3) and an exhaust valve (4), **characterised in that** the internal combustion engine (1) comprises an intake phase where air intake takes place, a first compression phase where the air admitted in the intake phase is compressed in a first compression phase until reaching a compression ratio smaller than the maximum compression ratio of the internal combustion engine (1), and subsequently a first portion of this compressed air is transferred, in a transfer phase, through the transfer valve (5), to a compressed air storage tank (12), where said first portion of transferred compressed air (12) constitutes the working fluid of a bottom cycle that receives heat at a constant pressure from the exhaust fumes of a top cycle coming from the internal combustion engine (1) and are subsequently conducted to a heat exchanger (32), where they absorb heat from the exhaust fumes of a top cycle, where the portion of air remaining in the cylinder (2), or second portion of air, once the phase of transfer of compressed air (12) to the storage tank has elapsed, where said second portion of air continues to be compressed in the internal combustion engine (1) in a second compression phase until the maximum compression ratio of the internal combustion engine (1), followed by a first expansion phase, where said second portion of air is overexpanded, and by a first exhaust phase, and where the top-cycle internal combustion engine exhaust fumes are conducted to the heat exchanger (32), where they transfer heat to the bottom-cycle compressed air at constant pressure, where the bottom-cycle compressed air is charged into the cylinder (2) through a charge valve (40) and is expanded in the interior of the cylinder (2) in a second expansion phase, where said bottom-cycle air, once expanded, is finally evacuated through the exhaust valve (4) during a second exhaust phase without passing through the exchanger (32), executing the top and bottom cycles in six piston strokes (37).

2. The eight-phases engine, according to preceding claim 1, **characterised in that** it comprises an ancillary compressor (36) destined for feeding the bottom-cycle compressed air (12) tank.

3. The eight-phases engine, according to any of the preceding claims, **characterised in that** it comprises an electronic control unit (25) that controls the opening and closing of the transfer valve (5) and of the charge valve (40) at all times, so that the pressure in the compressed air tank (12) remains constant within a pre-established range.

4. The eight-phases engine, according to claims 2 and 3, **characterised in that** the electronic control unit (25) also controls the actuation of the ancillary compressor (36).

5. The eight-phases engine, according to any of the preceding claims, **characterised in that** the internal combustion engine (1) is a spark ignition engine.

6. The eight-phases engine, according to claim 5, **characterised in that** the injection of a fuel takes place throughout the stroke from the piston (37) during the second compression stroke, through an injector (6).

7. The eight-phases engine, according to any of claims 1 to 4, **characterised in that** the internal combustion engine (1) is a compression ignition engine.

8. The eight-phases engine, according to claim 7, **characterised in that** the injection of a fuel through an injector (6) takes place at the end of the second compression stroke and start of the expansion stroke.

9. The eight-phases engine, according to any of the preceding claims, **characterised in that** the internal combustion engine (1) is atmospheric or supercharged.

## Patentansprüche

1. Achtphasen-Brennkraftmaschine, welche eine Verbrennungskraftmaschine (1) umfasst, die wiederum einen Lufteinlasskanal (8), ein Einlassventil (3) und ein Auslassventil (4) umfasst, **dadurch gekennzeichnet, dass** die Verbrennungskraftmaschine (1) eine Einlassphase, in welcher der Lufteinlass stattfindet, und eine erste Verdichtungsphase umfasst, in welcher die in der Einlassphase eingelassene Luft in einer ersten Verdichtungsphase verdichtet wird, bis ein Verdichtungsverhältnis erreicht wird, das niedriger als das maximale Verdichtungsverhältnis der Verbrennungskraftmaschine (1) ist, und ein erster Teil dieser verdichteten Luft anschließend in einer Übertragungsphase durch das Übertragungsventil (5) an einen Speichertank der verdichteten Luft (12) übertragen wird, wobei der erste Teil der übertragenen verdichteten Luft (12) das Arbeitsfluid eines Bottoming-Zyklus darstellt, welches Wärme unter einem konstanten Druck von den Abgasen eines von der Verbrennungskraftmaschine (1) stammenden Topping-Zyklus empfängt, und anschließend an einen Wärmetauscher (32) geleitet wird, wobei es Wärme von den Abgasen eines Topping-Zyklus aufnimmt, wobei der Teil der Luft, die in dem Zylinder (2) verbleibt, bzw. der zweite Teil der Luft nach Ablauf der Übertragungsphase der verdichteten Luft (12) an den Speichertank, wobei der zweite Teil der Luft weiter in der Verbrennungskraftmaschine (1) zum maximalen Verdichtungsverhältnis der Verbrennungskraftmaschine (1) in einer zweiten Verdichtungsphase verdichtet wird, welche von einer ersten Expansionsphase, wobei der zweite Teil der Luft überdehnt wird, und von einer ersten Auslassphase gefolgt wird, und wobei die Abgase der Verbrennungskraftmaschine des Topping-Zyklus an den Wärmetauscher (32) geleitet werden, wobei sie Wärme an die verdichtete Luft des Bottoming-Zyklus übertragen, wobei die verdichtete Luft des Bottoming-Zyklus durch ein Ladeventil (40) in den Zylinder (2) geladen wird und in dem Innenraum des Zylinders (2) in einer zweiten Ausdehnungsphase ausgedehnt wird, wobei die Luft des Bottoming-Zyklus, einmal ausgedehnt, schließlich durch das Auslassventil (4) während einer zweiten Auslassphase abgeleitet wird, ohne den Tauscher (32) zu durchlaufen, wobei sie den Topping- und Bottoming-Zyklus in sechs Kolbentakten (37) durchführt.

2. Achtphasen-Brennkraftmaschine nach dem vorhergehenden Anspruch 1, **dadurch gekennzeichnet, dass** sie einen zusätzlichen Verdichter (36) umfasst, der zum Speisen des Tanks der verdichteten Luft (12) des Bottoming-Zyklus vorgesehen ist.

3. Achtphasen-Brennkraftmaschine nach einem der vorhergehenden Ansprüche, **dadurch gekennzeichnet, dass** sie eine elektronische Steuereinheit (25) umfasst, welche jederzeit das Öffnen und Schließen des Übertragungsventils (5) und des Ladeventils (40) steuert, sodass der Druck in dem Tank der verdichteten Luft (12) konstant innerhalb eines vorbestimmten Bereichs bleibt.

4. Achtphasen-Brennkraftmaschine nach Anspruch 2 und 3, **dadurch gekennzeichnet, dass** die elektronische Steuereinheit (25) auch den Antrieb des zusätzlichen Verdichters (36) steuert.

5. Achtphasen-Brennkraftmaschine nach einem der vorhergehenden Ansprüche, **dadurch gekennzeichnet, dass** die Verbrennungskraftmaschine (1) ein Motor mit Fremdzündung ist.

6. Achtphasen-Brennkraftmaschine nach Anspruch 5, **dadurch gekennzeichnet, dass** das Einspritzen eines Kraftstoffs während des zweiten Verdichtungstakts entlang des Takts von dem Kolben (37) durch einen Injektor (6) stattfindet.

7. Achtphasen-Brennkraftmaschine nach einem der Ansprüche 1 bis 4, **dadurch gekennzeichnet, dass** die Verbrennungskraftmaschine (1) ein Motor mit Selbstzündung ist.

8. Achtphasen-Brennkraftmaschine nach Anspruch 7, **dadurch gekennzeichnet, dass** das Einspritzen eines Kraftstoffs durch einen Injektor (6) am Ende des zweiten Verdichtungstakts und am Anfang des Ausdehnungstakts stattfindet.

9. Achtphasen-Brennkraftmaschine nach einem der vorhergehenden Ansprüche, **dadurch gekennzeichnet, dass** die Verbrennungskraftmaschine (1) eine Saug- oder Aufladebrennkraftmaschine ist.

## Revendications

1. Moteur à huit temps comprenant un moteur à combustion interne (1) qui comprend à son tour un conduit d'admission d'air (8), une soupape d'admission (3) et une soupape d'échappement (4), **caractérisé en ce que** le moteur à combustion interne (1) comprend un temps d'admission où l'admission d'air a lieu, un premier temps de compression où l'air admis dans le temps d'admission est comprimé dans un premier temps de compression jusqu'à atteindre un taux de compression plus petit que le taux de compression maximum du moteur à combustion interne (1), et ultérieurement une première partie de cet air comprimé est transférée, dans un temps de transfert, à travers la soupape de transfert (5), à un réservoir de stockage d'air comprimé (12), où ladite première partie d'air comprimé transféré (12) constitue le fluide de travail d'un cycle inférieur qui reçoit la chaleur à une pression constante des gaz d'échappement d'un cycle supérieur provenant du moteur à combustion interne (1) et sont ultérieurement conduits à un échangeur de chaleur (32), où ils absorbent la chaleur des gaz d'échappement d'un cycle supérieur, où la partie d'air restant dans le cylindre (2), ou deuxième partie d'air, une fois que le temps de transfert d'air comprimé (12) au réservoir de stockage s'est écoulé, où ladite deuxième partie d'air continue d'être comprimée dans le moteur à combustion interne (1) dans un deuxième temps de compression jusqu'au taux de compression maximum du moteur à combustion interne (1), suivi par une première phase d'expansion, où ladite deuxième partie d'air est surexpansée, et par un premier temps d'échappement, et où les gaz d'échappement du moteur à combustion interne du cycle supérieur sont conduits à l'échangeur de chaleur (32), où ils transfèrent la chaleur à l'air comprimé du cycle inférieur à une pression constante, où l'air comprimé du cycle inférieur est chargé dans le cylindre (2) par une soupape de chargement (40) et est expansé à l'intérieur du cylindre (2) dans un deuxième temps d'expansion, où ledit air du cycle inférieur, une fois expansé, est finalement évacué par la soupape d'échappement (4) pendant un deuxième temps d'échappement sans passer par l'échangeur (32), exécutant les cycles supérieur et inférieur en six courses de piston (37).

2. Moteur en huit temps, selon la revendication 1 précédente, **caractérisé en ce qu'**il comprend un compresseur auxiliaire (36) destiné à alimenter le réservoir d'air comprimé du cycle inférieur (12).

3. Moteur en huit temps, selon l'une quelconque des revendications précédentes, **caractérisé en ce qu'**il comprend une unité de commande électronique (25) qui commande l'ouverture et la fermeture de la soupape de transfert (5) et de la soupape de chargement (40) à tout moment, de sorte que la pression dans le réservoir d'air comprimé (12) reste constante dans une plage préétablie.

4. Moteur en huit temps, selon les revendications 2 et 3, **caractérisé en ce que** l'unité de commande électronique (25) commande également l'actionnement du compresseur auxiliaire (36).

5. Moteur en huit temps, selon l'une quelconque des revendications précédentes, **caractérisé en ce que** le moteur à combustion interne (1) est un moteur à allumage commandé.

6. Moteur en huit temps, selon la revendication 5, **caractérisé en ce que** l'injection d'un carburant a lieu le long de la course du piston (37) pendant la deuxième course de compression, par un injecteur (6).

7. Moteur en huit temps, selon l'une quelconque des revendications 1 à 4, **caractérisé en ce que** le moteur à combustion interne (1) est un moteur à allumage par compression.

8. Moteur en huit temps, selon la revendication 7, **caractérisé en ce que** l'injection d'un carburant par un injecteur (6) a lieu à la fin de la deuxième course de compression et au début de la course d'expansion.

9. Moteur en huit temps, selon l'une quelconque des revendications précédentes, **caractérisé en ce que** le moteur à combustion interne (1) est atmosphérique ou suralimenté.
